(19) Europäisches Patentamt
European Patent Office
Office européen des brevets

(11) **EP 4 183 476 A1**

(12) **EUROPEAN PATENT APPLICATION**
published in accordance with Art. 153(4) EPC

(43) Date of publication:
**24.05.2023 Bulletin 2023/21**

(21) Application number: **21841354.0**

(22) Date of filing: **25.06.2021**

(51) International Patent Classification (IPC):
*B01D 69/00* (2006.01)     *B01D 69/02* (2006.01)
*B01D 71/40* (2006.01)     *C08K 5/17* (2006.01)
*C08L 33/02* (2006.01)     *B01D 53/22* (2006.01)

(52) Cooperative Patent Classification (CPC):
**B01D 53/22; B01D 69/00; B01D 69/02;**
**B01D 71/40; C08K 5/17; C08L 33/02**

(86) International application number:
**PCT/JP2021/024171**

(87) International publication number:
**WO 2022/014302 (20.01.2022 Gazette 2022/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.07.2020 JP 2020122055**

(71) Applicant: **SUMITOMO CHEMICAL COMPANY,**
**LIMITED**
**Tokyo 103-6020 (JP)**

(72) Inventors:
• **BANDO, Akinori**
**Ichihara-shi, Chiba 299-0195 (JP)**
• **MAKIGUCHI, Kosuke**
**Ichihara-shi, Chiba 299-0195 (JP)**
• **HOSODA, Hajime**
**Osaka-shi, Osaka 554-8558 (JP)**
• **AOKI, Ayumi**
**Osaka-shi, Osaka 554-8558 (JP)**
• **KASHIWABARA, Taigo**
**Ichihara-shi, Chiba 299-0195 (JP)**

(74) Representative: **Winter, Brandl - Partnerschaft**
**mbB**
**Alois-Steinecker-Straße 22**
**85354 Freising (DE)**

(54) **RESIN COMPOSITION FOR GAS SEPARATION MEMBRANE AND GAS SEPARATION MEMBRANE**

(57)     A resin composition for a gas separation membrane contains a crosslinked polymer (X) having a carboxy group or a salt thereof and a crosslinked structure. A mesh size of the crosslinked polymer (X) is greater than or equal to 1.75 nm and less than or equal to 2.35 nm.

**EP 4 183 476 A1**

**Description**

TECHNICAL FIELD

The present invention relates to a resin composition for a gas separation membrane, a gas separation membrane, a method for manufacturing the gas separation membrane, a separation membrane element, a separation membrane module, a gas separation device, and a gas separation method.

BACKGROUND ART

As a process of separating acidic gases such as carbon dioxide from a synthesis gas synthesized in large-scale plants for manufacturing hydrogen and urea, a residual exhaust gas of the synthesis gas, a natural gas, and the like, a gas membrane separation process has recently attracted attention because it is possible to save energy. As a gas separation membrane that is used in a gas membrane separation process, for example, a $CO_2$ gas separation membrane with a separation function layer provided on a support layer including a porous membrane is disclosed in International Publication No. WO 2016/024523 (Patent Literature 1). The separation function layer disclosed in Patent Literature 1 contains a composition for a $CO_2$ gas separation membrane which contains a crosslinked polymer in which a polymer having a carboxy group is crosslinked.

CITATION LIST

PATENT LITERATURE

PTL 1: International Publication No. WO 2016/024523

SUMMARY OF INVENTION

TECHNICAL PROBLEM

For a gas separation membrane that is used in a gas membrane separation process, it is required to further improve permeability to a gas component which permeates selectively through the gas separation membrane, so that the separation performance of the gas separation membrane is improved.
An object of the present invention is to provide a resin composition for a gas separation membrane which enables production of a gas separation membrane having excellent separation performance, and a gas separation membrane.

SOLUTION TO PROBLEM

The present invention provides a resin composition for a gas separation membrane, a gas separation membrane, a method for manufacturing the gas separation membrane, a separation membrane element, a separation membrane module, a gas separation device, and a gas separation method as shown below.

[1] A resin composition for a gas separation membrane, containing a crosslinked polymer (X) having a carboxy group or a salt thereof and a crosslinked structure, in which a mesh size of the crosslinked polymer (X) in the resin composition is greater than or equal to 1.75 nm and less than or equal to 2.35 nm.
[2] The resin composition for a gas separation membrane according to [1], in which a correlation function value of the crosslinked polymer (X) at a relaxation time of $3 \times 10^4\ \mu$ seconds is greater than or equal to 0.28 and less than or equal to 0.64 as measured by scanning microscopic light scattering.
[3] The resin composition for a gas separation membrane according to [1] or [2], in which the crosslinked polymer (X) is polyacrylic acid having a crosslinked structure.
[4] The resin composition for a gas separation membrane according to any one of [1] to [3], in which a cation forming the salt of the carboxy group is one or more selected from the group consisting of an alkali metal ion, an ammonium ion, a quaternary ammonium ion, and a protonated amine.
[5] The resin composition for a gas separation membrane according to any one of [1] to [4], further containing an amino acid or a salt thereof.
[6] A gas separation membrane which is selectively permeable to a specific gas component, the gas separation membrane containing the resin composition for a gas separation membrane according to any one of [1] to [5].
[7] The gas separation membrane according to [6], further including a first porous layer and a separation function layer laminated on the first porous layer,
the separation function layer containing the resin composition for a gas separation membrane.

[8] The gas separation membrane according to [6] or [7], in which the specific gas is an acidic gas.

[9] The gas separation membrane according to [8], in which the acidic gas is carbon dioxide.

[10] A method for manufacturing a gas separation membrane which is selectively permeable to a specific gas component,

> the gas separation membrane including a first porous layer, and a separation function layer containing the resin composition for a gas separation membrane according to any one of [1] to [5],
> the method including applying an application liquid containing the resin composition onto the first porous layer.

[11] The method for manufacturing a gas separation membrane according to [10], in which the applying includes preparing the application liquid, and the preparing includes mixing a crosslinked polymer (Xa) having the carboxy group and the crosslinked structure, and a medium.

[12] The method for manufacturing a gas separation membrane according to [10] or [11], in which the applying includes preparing the application liquid, and the preparing includes mixing a crosslinked polymer (Xa) having the carboxy group and the crosslinked structure, a medium, and a basic compound.

[13] The method for manufacturing a gas separation membrane according to [12], in which the basic compound includes an alkali metal compound.

[14] The method for manufacturing a gas separation membrane according to any one of [10] to [13], further including removing the medium from an applied layer formed on the first porous layer in the applying.

[15] A separation membrane element for separating a specific gas component from a source gas containing the specific gas component, the separation membrane element including: the gas separation membrane according to any one of [6] to [9];

> a feed-side space for feeding the source gas to the gas separation membrane;
> a permeation-side space for a permeate gas that has permeated the gas separation membrane; and
> a sealing portion for preventing mixing of the source gas in the feed-side space and the permeate gas in the permeation-side space.

[16] A separation membrane module including: the separation membrane element according to [15];

> a source gas feeding port for feeding the source gas to the gas separation membrane;
> a retentate gas discharge port for discharging the source gas that does not permeate the gas separation membrane; and
> a permeate gas discharge port for discharging the permeate gas.

[17] A gas separation device including the separation membrane module according to [16].

[18] A gas separation method for separating a specific gas component by bringing a source gas containing at least the specific gas component into contact with the gas separation membrane according to any one of [6] to [9].

ADVANTAGEOUS EFFECT OF INVENTION

According to the present invention, it is possible to provide a resin composition for a gas separation membrane which enables production of a gas separation membrane having excellent separation performance, and a gas separation membrane.

BRIEF DESCRIPTION OF DRAWINGS

Fig. 1 is a schematic cross-sectional view schematically showing an example of a gas separation membrane of the present invention.
Fig. 2 is a schematic cross-sectional view schematically showing another example of a gas separation membrane of the present invention.
Fig. 3 is a schematic perspective view showing an example of a gas separation membrane element of the present invention, in which a partially cutout portion is provided.
Fig. 4 is a schematic perspective view showing another example of a gas separation membrane element of the present invention, in which a partially cutout portion is provided.

Fig. 5 is an outline schematic diagram illustrating a gas separation device used in examples.

DESCRIPTION OF EMBODIMENTS

<Resin composition for gas separation membrane>

A resin composition for a gas separation membrane according to an embodiment includes a crosslinked polymer (X) having a carboxy group or a salt thereof and a crosslinked structure. A mesh size of crosslinked polymer (X) in the resin composition is greater than or equal to 1.75 nm and less than or equal to 2.35 nm.

The resin composition may include a non-crosslinked polymer, an amino acid or a salt thereof, a hydration reaction catalyst, a filler, a surfactant, a medium, and the like in addition to crosslinked polymer (X). The resin composition can be obtained by, for example, mixing crosslinked polymer (X) and the additives in the medium.

The resin composition can be used for obtaining a gas separation membrane described later, and particularly for forming a separation function layer of a gas separation membrane. The gas separation membrane formed using the resin composition can have excellent separation performance.

Hereinafter, each component contained in the resin composition will be described.

(Crosslinked polymer (X))

Crosslinked polymer (X) is a crosslinked polymer (Xa) having a carboxy group (-COOH) or a crosslinked polymer (Xb) having a salt of a carboxy group (-COOM$^1$ [wherein M$^1$ represents a monovalent cation other than a proton]). The resin composition may contain only one crosslinked polymer (X), or two or more crosslinked polymers (X). When the resin composition contains two or more crosslinked polymers (X), the resin composition may contain both crosslinked polymer (Xa) and crosslinked polymer (Xb).

Examples of the cation (monovalent cation represented by M$^1$ above) of the salt of a carboxy group of crosslinked polymer (Xb) include monovalent metal ions such as alkali metal ions such as a lithium ion, a potassium ion, a sodium ion, a cesium ion and a rubidium ion; an ammonium ion ($NH_4^+$); quaternary ammonium ions ($NR^1R^2R^3R^4)^+$ [wherein R$^1$ to R$^3$ each independently represent a hydrocarbon group optionally having a substituent]; and protonated amines (($NHR^1R^2R^3)^+$, ($NH_2R^1R^2)^+$, ($NH_3R^1)^+$ [wherein R$^1$ to R$^3$ each independently represent a hydrocarbon group optionally having a substituent). The cation of the salt of the carboxy group is preferably an alkali metal ion, more preferably a potassium ion or a cesium ion.

The crosslinked structure of crosslinked polymer (X) is such that polymer chains, which are main structures of a polymer, are linked within polymer chains or between polymer chains to form a three-dimensional network structure. The linkage of polymer chains may be a covalent bond (sometimes referred to as "chemical crosslinking"), a hydrogen bond, or a bond by the van der Waals force (sometimes referred to as "physical crosslinking").

The mesh size of crosslinked polymer (X) in the resin composition is greater than or equal to 1.75 nm, preferably greater than or equal to 1.80 nm, more preferably greater than or equal to 1.84 nm, and less than or equal to 2.30 nm, preferably less than or equal to 2.20 nm, more preferably less than or equal to 2.13 nm. The mesh size can be measured by small angle X-ray scattering (hereinafter, sometimes referred to as a "SAXS method") using an aqueous dispersion liquid having a resin composition concentration of 12 wt%. Specifically, the mesh size can be measured by a method described in examples described later.

The mesh size can be used as an indication of the degree of crosslinking of crosslinked polymer (X). If the mesh size is more than 2.30 nm, crosslinked polymer (X) tends to have such a low degree of crosslinking that it is difficult to retain water. If the mesh size is less than 1.75 nm, the crosslinking density of crosslinked polymer (X) tends to increase to the extent that the degree of swelling decreases, leading to a decrease in amount of water which can be retained in the crosslinked structure. When the mesh size is within the above-described range, crosslinked polymer (X) can properly retain water. Thus, it is considered that when a gas separation membrane is obtained using a resin composition containing crosslinked polymer (X), it is possible to improve permeability to a specific gas component which permeates selectively through the gas separation membrane.

The mesh size of crosslinked polymer (X) can be controlled by, for example, adjusting the type (structure) of a monomer used for obtaining crosslinked polymer (X), the type (structure) of a crosslinking agent when the crosslinking agent is used, the charge ratio of the monomer and/or the crosslinking agent, and/or polymerization conditions.

In crosslinked polymer (X), the correlation function value at a relaxation time of $3 \times 10^4 \mu$ seconds, which is measured by scanning microscopic light scattering (hereinafter, sometimes referred to as a "SMILS method") for crosslinked polymer (X) is preferably greater than or equal to 0.28, more preferably greater than or equal to 0.30, still more preferably greater than or equal to 0.35, and is preferably less than or equal to 0.64, more preferably less than or equal to 0.62, still more preferably less than or equal to 0.55. The correlation function value can be measured by a method described in examples described later. Specifically, the correlation function value is measured using a measurement sample in which the concentration of crosslinked polymer (Xa) having a carboxy group and a crosslinked structure is 2.3 wt%. Crosslinked polymer (Xa) has the carboxy group and the crosslinked structure of crosslinked polymer (X), and when crosslinked polymer (X) has a salt of a carboxy group, crosslinked polymer (Xa) has a carboxy group that is not in the form of such a salt, and a crosslinked structure.

From the correlation function value at a relaxation time of $3 \times 10^4$ $\mu$ seconds, information on imperfectness and defects of the network structure (crosslinked structure) of crosslinked polymer (X), i.e. information on the degree of sol components contained in the network structure of crosslinked polymer (X), and non-uniformity of the crosslinked structure and/or the degree of swelling can be obtained. Thus, the correlation function value can be used as an indication of the homogeneity of the network structure of crosslinked polymer (X). It is considered that when the correlation function value is within the above-described range, crosslinked polymer (X) has a uniform network structure. Thus, it is considered that when a gas separation membrane is obtained using a resin composition containing crosslinked polymer (X), it is easy to obtain a gas separation membrane having good permeability to a specific gas component which permeates selectively through the gas separation membrane. It is thought that if the correlation function value is less than 0.28, the amount of sol components is excessively small. In this case, permeability to a specific gas component which permeates selectively through the gas separation membrane may be deteriorated because the degree of swelling of crosslinked polymer (X) tends to decrease, leading to a decrease in amount of water that can be retained in the crosslinked structure. On the other hand, it is considered that if the correlation function value is more than 0.64, the amount of sol components is likely to increase in part, resulting in a non-uniform crosslinked structure and/or degree of swelling. Thus, it is thought that in the later-described separation function layer of the gas separation membrane, the state of packing of crosslinked polymer (X) is disordered, so that very small spaces are generated, leading to deterioration of the denseness of the separation function layer. Accordingly, permeability to retentate gases may increase, resulting in deterioration of selectivity, or a function as a gas separation membrane may be lost (leakage may occur).

The correlation function value of crosslinked polymer (X) can be controlled by, for example, adjusting the type (structure) of a monomer used for obtaining crosslinked polymer (X), the type (structure) of a crosslinking agent when the crosslinking agent is used, the charge ratio of the monomer and/or the crosslinking agent, and/or polymerization conditions.

Crosslinked polymer (X) is preferably polyacrylic acid having a crosslinked structure or a salt thereof. The polyacrylic acid having a crosslinked structure or a salt thereof has a crosslinked structure, and an acrylic acid unit (-CH$_2$CH(COOH)-) or an acrylate unit (-CH$_2$CH(COOM$^1$)- [wherein M$^1$ represents a monovalent cation other than a proton]). The crosslinked structure of the polyacrylic acid may be a constituent unit derived from a crosslinkable monomer described later. Examples of M$^1$ include those described above.

Crosslinked polymer (X) having an acrylic acid unit or an acrylate unit can be obtained by, for example, polymerizing a monomer component containing acrylic acid or a salt thereof.

Crosslinked polymer (X) may be obtained by polymerizing only acrylic acid or a salt thereof, or may be obtained by polymerizing a monomer component containing acrylic acid or a salt thereof and a monomer other than acrylic acid or a salt thereof. Examples of the monomer other than acrylic acid or a salt thereof include itaconic acid, crotonic acid, methacrylic acid, maleic acid, fumaric acid, salts thereof, and fatty acid vinyl esters such as vinyl acetate and vinyl propionate. Examples of the cation forming the salt include monovalent cations other than a proton, which are represented by M$^1$ described above. The monomer component may contain only one or two or more monomers other than acrylic acid or a salt thereof.

When the monomer component contains a fatty acid vinyl ester, a vinyl alcohol unit (-CH$_2$CH(OH)-) can be introduced into crosslinked polymer (X) by polymerizing the monomer component, and then saponifying at least a part of the constitutional unit derived from a fatty acid vinyl ester.

When crosslinked polymer (X) is a copolymer, the type of the copolymer is not particularly limited, and the copolymer may be a random copolymer, an alternating copolymer, a block copolymer, or a graft copolymer.

Crosslinked polymer (Xb) having a salt of a carboxy group may be obtained by polymerizing a monomer component containing a monomer having a salt of a carboxy group as described above. Alternatively, crosslinked polymer (Xb) may be obtained by mixing crosslinked polymer (Xa) having a carboxy group and the compound containing a monovalent cation (M$^1$) other than a proton. Examples of the compound containing a monovalent cation (M$^1$) other than a proton include basic compounds described later.

The crosslinked structure of crosslinked polymer (X) may be one introduced by performing intra-polymer or inter-polymer crosslinking using a crosslinking agent, or one introduced by performing intra-polymer or inter-polymer crosslinking by heating, irradiation with an active energy ray, or the like, or one introduced by polymerizing a crosslinkable monomer and a monomer having a carboxy group or an alkyl ester group which is formed into a carboxy group or a salt thereof by a hydrolysis reaction. The crosslinked structure of crosslinked polymer (X) may be introduced by, for example, a known method disclosed in Japanese Patent Laying-Open No. 2003-268009 or Japanese Patent Laying-Open No. 7-88171.

The crosslinking agent is not particularly limited, and a known crosslinking agent can be used. Examples of the crosslinking agent include epoxy crosslinking agents, polyvalent glycidyl ether, polyhydric alcohols, polyvalent isocyanates, polyvalent aziridines, haloepoxy compounds, polyvalent aldehydes, polyvalent amines, polyvalent olefin compounds, organometallic crosslinking agents, and metallic crosslinking agents.

Examples of the active energy ray applied for introducing a crosslinked structure include ultraviolet rays, electron beams, and radiations.

The crosslinkable monomer is not particularly limited, and a known monomer can be used. Examples of the crosslinkable monomer include divinylbenzene, N,N'-methylenebisacrylamide, trimethylolpropane triallylether, pentaerythritol tetraallyl ether, and polyfunctional acrylate. Examples of the polyfunctional acrylate include 1,3-butylene glycol di(meth)acrylate, 1,4-butanediol di(meth)acrylate, 1,6-hexanediol di(meth)acrylate, neopentyl glycol di(meth)acrylate, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, tripropylene glycol di(meth)acrylate, trimethylolpropane tri(meth)acrylate, pentaerythritol tetra(meth)acrylate, pentaerythritol tetraallyl ether, and dipentaerythritol penta(meth)acrylate.

As crosslinked polymer (X), a marketed product may be used. Examples of the crosslinked polymer (X) include SANFRESH (registered trademark) manufactured by Sanyo Chemical Industries, Ltd., AQUPEC HV-801 EG and HV-801 EG 300 (registered trademark) manufactured by Sumitomo Seika Chemicals Company, Limited, and CARBOPOL 71G, 971 P981 and 941 manufactured by Lubrizol Corporation.

The viscosity of crosslinked polymer (X), which is measured in terms of a 0.5 wt% aqueous solution under the conditions of a pH of 7, a temperature of 25°C and a rotation speed of 20 rpm by using a B-type viscometer, is preferably greater than or equal to $1 \times 10^3$ mPa s, more preferably greater than or equal to $3 \times 10^3$ mPa·s, still more preferably greater than or equal to $4 \times 10^3$ mPa s, particularly preferably greater than or equal to $5 \times 10^3$ mPa·s, and preferably less than or equal to $3 \times 10^4$ mPa·s, more preferably less than or equal to $2 \times 10^4$ mPa·s, still more preferably less than or equal to $1.5 \times 10^4$ mPa·s, particularly preferably less than or equal to $12 \times 10^3$ mPa·s. When the viscosity is within the above-described range, it is possible to obtain crosslinked polymer (X) having good pressure resistance, water-retention capacity and the like.

(Non-crosslinked polymer)

The resin composition may contain a non-crosslinked polymer. The non-crosslinked polymer is a polymer having no crosslinked structure. Examples of the non-crosslinked polymer include polymers having an acidic dissociable group or a salt thereof, polymers having a group which is formed into an acidic dissociable group or a salt thereof by a hydrolysis reaction (hereinafter, sometimes referred to as an "acidic dissociable group derivative group"), acrylamide-based polymers, vinyl alcohol-based polymers, and ethylene oxide-based polymers.

The content of the non-crosslinked polymer contained in the resin composition is preferably greater than or equal to 1 part by weight, more preferably greater than or equal to 3 parts by weight, still more preferably greater than or equal to 5 parts by weight, and preferably less than or equal to 80 parts by weight, more preferably less than or equal to 60 parts by weight, still more preferably less than or equal to 50 parts by weight, furthermore preferably less than or equal to 50 parts, particularly preferably less than or equal to 30 parts by weight, based on 100 parts by weight of the crosslinked polymer (X). When the content of the non-crosslinked polymer is within the above-described range, it is possible to obtain good film formability when the resin composition is used for forming a separation function layer of a gas separation membrane. The resin composition may contain only one non-crosslinked polymer, or two or more non-crosslinked polymers.

The acidic dissociable group is an acidic ionic group capable of releasing a protons ($H^+$) in water. The acidic dissociable group is, for example, at least one selected from the group consisting of a carboxy group (-COOH), a sulfonic acid group ($-SO_2(OH)$), an oxysulfonic acid group ($-O-SO_2(OH)$), a phosphoric acid group ($-P(O)(OH)_2$), and an oxyphosphoric acid group ($-O-P(O)(OH)_2$). The acidic dissociable group is preferably a carboxy group, a sulfonic acid group, or a phosphoric acid group.

The salt of the acidic dissociable group is, for example, at least one selected from the group consisting of $-COOM^1$, $-S(O)_2(OM^2)$, $-O-SO_2(OM^3)$, $-P(O)(OM^4)(OM'^1)$ and $-O-P(O)(OM^5)(OM'^2)$ [wherein $M^1$ to $M^5$ each independently represent a monovalent cation other than a proton, and $M'^1$ and $M'^2$ each independently represent a monovalent cation which may be a proton]. Examples of the monovalent cation other than a proton, which is represented by $M^1$ to $M^5$, $M'^1$ and $M'^2$, include monovalent cations represented by $M^1$ described above. The monovalent cation is preferably a monovalent metal ion, more preferably an alkali metal ion such as a sodium ion, a potassium ion or a cesium ion, still more preferably a sodium ion or a cesium ion, particularly preferably a cesium ion.

Examples of the derivative group of the acidic dissociable group include - $COOR^{a1}$, $-CO-O-CO-$, $-CO-NR'^{a1}-CO-$, $-S(O)_2(OR^{a2})$, $-O-SO_2(OR^{a3})$, - $P(O)(OR^{a4})(OR'^{a2})$, $-O-P(O)(OR^{a5})(OR'^{a3})$, $-CON(R'^{a4})(R'^{a5})$, $-S(O)_2N(R'^{a6})(R'^{a7})$, $-O-SO2NR'^{a8}$, $-P(O)\{N(R'^{a9})(Ro'^{a10})\}\{N(R'^{a11})(R'^{a12})\}$ and $-OP(O)\{N(R'^{a13})(R'^{a14})\}\{N(R'^{a15})(R'^{a16})\}$ [wherein $R^{a1}$ to $R^{a5}$

each independently represent an alkyl group optionally having a substituent or an aryl group optionally having a substituent, and $R'^{a1}$ to $R'^{a16}$ each independently represent a hydrogen atom, an alkyl group optionally having a substituent or an aryl group optionally having a substituent].

Preferably, the non-crosslinked polymer has a carboxy group or a salt thereof, or a group which is formed into a carboxy group or a salt thereof by a hydrolysis reaction, such as an alkoxycarbonyl group or an acid anhydride (hereinafter, sometimes referred to as a "carboxy group derivative group"). The non-crosslinked polymer having a carboxy group or a salt thereof, or a carboxy group derivative group (hereinafter, they are sometimes referred to collectively as a "carboxy group or the like") preferably has an acrylic acid unit (-$CH_2CH(COOH)$-) as a constituent unit. Such a non-crosslinked polymer can be obtained by, for example, polymerizing a monomer component containing acrylic acid or a salt thereof.

The Non-crosslinked polymer may be obtained by polymerizing only acrylic acid or a salt thereof, or may be obtained by polymerizing a monomer component containing acrylic acid or a salt thereof and a monomer other than acrylic acid or a salt thereof. Examples of the monomer other than acrylic acid or a salt thereof include itaconic acid, crotonic acid, methacrylic acid, maleic acid, fumaric acid, or salts thereof, and fatty acid vinyl esters such as acrylamide, methacrylamide, vinyl acetate and vinyl propionate. Examples of the cation forming the salt include monovalent cations other than a proton, which are represented by $M^1$ described above. The monomer component may contain only one or two or more monomers other than acrylic acid or a salt thereof.

When the monomer component contains a fatty acid vinyl ester, a vinyl alcohol unit (-$CH_2CH(OH)$-) can be introduced into non-crosslinked polymer (X) by polymerizing the monomer component, and then saponifying at least a part of the constitutional unit derived from a fatty acid vinyl ester.

The polymer having a carboxy group or the like may further have an acidic dissociable group other than a carboxy group or the like or a salt thereof, or an acidic dissociable group derivative group (hereinafter, they are sometimes referred to collectively as "another acidic dissociable group or the like"). The non-crosslinked polymer having a carboxy group or the like and another acidic dissociable group or the like can be obtained by polymerizing a monomer having a carboxy group or the like and a monomer having another acidic dissociable group or the like, or adding a monomer or polymer having another acidic dissociable group or the like to a polymer of a monomer having a carboxy group or the like.

When the non-crosslinked polymer is a copolymer, the type of the copolymer is not particularly limited, and the copolymer may be a random copolymer, an alternating copolymer, a block copolymer, or a graft copolymer.

The non-crosslinked polymer having a salt of an acidic dissociable group may be obtained by polymerizing a monomer component containing a monomer having a salt of an acidic dissociable group. Alternatively, the non-crosslinked polymer having a salt of an acidic dissociable group may be obtained by mixing a non-crosslinked polymer having an acidic dissociable group and/or an acidic dissociable group derivative group and the compound containing a monovalent cation other than a proton. Examples of the compound containing a monovalent cation other than a proton include basic compounds described later.

The viscosity of the non-crosslinked polymer, which is measured in terms of a 0.2 wt% aqueous solution under the conditions of a pH of 7, a temperature of 25°C and a rotation speed of 20 rpm by using a B-type viscometer, is preferably greater than or equal to 100 mPa·s, more preferably greater than or equal to 150 mPa·s, still more preferably greater than or equal to 200 mPa·s, and preferably less than or equal to 1500 mPa·s, more preferably less than or equal to 1200 mPa·s, still more preferably less than or equal to 1000 mPa s.

(Amino acid or salt thereof)

The resin composition may contain an amino acid or a salt thereof. The gas separation membrane formed using the resin composition containing the amino acid or a salt thereof can have excellent separation performance. The content of the amino acid or a salt thereof contained in the resin composition is preferably greater than or equal to 10 parts by weight, more preferably greater than or equal to 15 parts by weight, still more preferably greater than or equal to 20 parts by weight, and preferably less than or equal to 50 parts by weight, more preferably less than or equal to 40 parts by weight, still more preferably less than or equal to 30 parts by weight, based on 100 parts by weight of the concentration of solid contents in the resin composition. The resin composition may contain only one amino acid or salt thereof, or two or more amino acids or salts thereof.

The amino acid refers to a compound having both an amino group and a carboxy group as functional groups. The amino group may be any of a primary to a tertiary amino group, and is preferably a primary amino group or a secondary amino group, more preferably a secondary amino group. The amino acid is preferably an $\alpha$-amino acid in which an amino group is bonded to a carbon atom to which a carboxy group is bonded.

The salt of an amino acid refers to one in which a carboxy group of an amino acid forms a salt. Examples of the cation of the salt of an amino acid include monovalent cations other than a proton, which are represented by $M^1$ described above.

The amino acid is not particularly limited as long as it has an amino group and a carboxy group. The amino acid is preferably at least one selected from the group consisting of, for example, glycine, N,N-dimethylglycine, alanine, serine, proline, taurine, diaminopropionic acid, 2-aminopropionic acid, 2-aminoisobutyric acid, 3,4-dihydroxyphenylalanine, sarcosine, 3-(methylamino)propionic acid, N-(2-aminoethyl)glycine, N-(3-aminopropyl)glycine, N-(4-cyanophenyl)glycine, dimethylglycine, hippuric acid, 4-aminohippuric acid, N-(4-hydroxyphenyl)glycine, hydantoic acid, iminodiacetic acid, iminodipropionic acid, N-isovalerylglycine, phenaceturic acid, N-tigloylglycine, aceturic acid, alanylglycylglycine, benzoylglycylglycine, ethylenediamine diacetic acid, ethylenediamine dipropionic acid, 2-allylglycine, N-β-alanylglycine, N-acetyl-β-alanine, arginine, asparagine, aspartic acid, cysteine, glutamine, glutamic acid, histidine, isoleucine, leucine, lysine, methionine, phenylalanine, threonine, tryptophan, tyrosine, valine, ornithine, citrulline, cystine and pipecolinic acid. The amino acid is preferably at least one selected from the group consisting of glycine, N,N-dimethylglycine, alanine, serine, proline, taurine, diaminopropionic acid, 2-aminopropionic acid, 2-aminoisobutyric acid, 3,4-dihydroxyphenylalanine and sarcosine.

The salt of an amino acid is preferably one in which a carboxy group of an amino acid forms a salt as described above. The salt of an amino acid may be obtained by mixing an amino acid and the compound containing a monovalent cation other than a proton. Examples of the compound containing a monovalent cation other than a proton include basic compounds described later.

(Hydration reaction catalyst)

The resin composition may contain a hydration reaction catalyst. When the specific gas component that permeates selectively through the gas separation membrane is an acidic gas, examples of the hydration reaction catalyst include oxo acid compounds. The oxo acid compound is preferably at least one elemental oxo acid compound selected from the group consisting of group 14 elements, group 15 elements, and group 16 elements, more preferably at least one selected from the group consisting of a tellurious acid compound, a selenious acid compound, an arsenious acid compound, and an orthosilicic acid compound. Separation function layer 15 can contain one or two or more oxo acid compounds.

(Filler)

The resin composition may contain a filler. The filler may be an organic filler or an inorganic filler. Examples of the organic filler include starch, pulp, cellulose, polystyrene-based resins, modified melanin resins, lignin, rubber powder, epoxy-based resins, and biodegradable resins such as polylactic acid. Examples of the inorganic filler include talc, silica, diatomaceous earth, kaolin, mica, gypsum, graphite, alumina, zirconia, titania and ceramics. As the filler, one obtained by subjecting the above-described filler to surface treatment with a known surface modifier can also be used. One or more fillers may be contained in the resin composition.

(Surfactant)

The resin composition may contain a surfactant. As the surfactant, conventionally known surfactants such as polyoxyethylene polyoxypropylene glycols, polyoxyethylene alkyl phenyl ethers, polyoxyethylene alkyl ethers, fluorine-based surfactants, and silicone-based surfactants can be used. One or more surfactants may be contained in the resin composition.

(Medium)

The resin composition may contain a medium. Examples of the medium include protic polar solvents such as water, and alcohols (such as methanol, ethanol, 1-propanol, and 2-propanol); nonpolar solvents such as toluene, xylene, and hexane; and aprotic polar solvents such as ketones (such as acetone, methyl ethyl ketone, and methyl isobutyl ketone), N-methylpyrrolidone, N,N-dimethylacetamide, and N,N-dimethylformamide. A single kind of medium may be used alone, or greater than or equal to two kinds of media may be used in combination as long as they are compatible with each other. Among these, a medium containing at least one selected from the group consisting of water and alcohols (such as methanol, ethanol, 1-propanol, and 2-propanol) is preferable, and a medium containing water is more preferable. When the resin composition contains a medium, the resin composition may be directly used as an application liquid described later.

<Gas separation membrane>

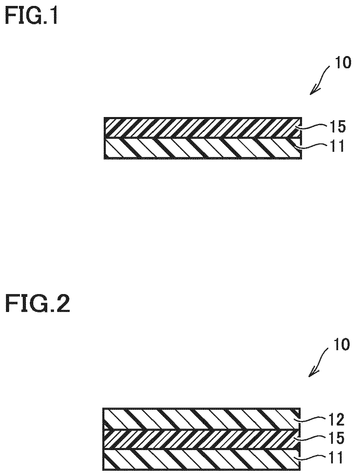

Figs. 1 and 2 are schematic cross-sectional views schematically showing an example of a gas separation membrane according to an embodiment. The gas separation membrane according to the present embodiment is selectively permeable to a specific gas component, and contains the resin composition. As shown in Fig. 1, it is preferable that a gas separation membrane 10 includes a first porous layer 11, and a separation function layer 15 laminated on the first porous layer 11. Separation function layer 15 contains the resin composition. As shown in Fig. 2, gas separation membrane 10 may include a second porous layer 12 on separation function layer 15 on a side opposite to first porous layer 11.

The specific gas component that selectively permeates gas separation membrane 10 is preferably an acidic gas. Examples of the acidic gas include carbon dioxide ($CO_2$), hydrogen sulfide ($H_2S$), carbonyl sulfide, sulfur oxide ($SO_x$), hydrogen cyanide, nitrogen oxide ($NO_x$), and hydrogen halides such as hydrogen chloride. The specific gas component is preferably carbon dioxide or hydrogen sulfide, more preferably carbon dioxide.

(Separation function layer)

Separation function layer 15 has gas selective permeability in which the layer is selectively permeable to mainly a specific gas component. Separation function layer 15 contains a resin composition, and is preferably in a gel form. It is preferable that separation function layer 15 contains water. The content of water contained in separation function layer 15 at a temperature of 25°C and a humidity of 40% RH is preferably greater than or equal to 1 wt%, more preferably greater than or equal to 3%, still more preferably greater than or equal to 5 wt%, furthermore preferably greater than or equal to 8 wt%, particularly preferably greater than or equal to 10 wt%, and preferably less than or equal to 99.9 wt%, more preferably less than or equal to 98 wt%, still more preferably less than or equal to 80 wt%, furthermore preferably less than or equal to 70 wt%, particularly preferably less than or equal to 60 wt%, based on the total weight of separation function layer 15.

The content of water can be measured in accordance with the following procedures (1) to (4).

(1) The gas separation membrane (including a porous layer (first porous layer and/or second porous layer) and a separation function layer) is cut out with a punch having a diameter of 14.5 mm. The cut-out piece is stored for one night or longer in a thermohygrostat bath at a temperature of 25°C and a humidity of 40% RH, and the cut-out piece is then taken out from the thermohygrostat, and weighed (as A [g]).
(2) Next, the cut-out piece is heated with a halogen moisture meter, and the amount of moisture amount (W [g]) of the cut-out piece is calculated.
(3) Subsequently, the separation function layer of the cut-out piece is washed away with running water. Moisture of the porous layer is wiped off, the porous layer is then heated with the halogen moisture meter to remove the moisture by evaporation, and the porous layer is then weighed (as B [g]).
(4) The content of water contained in separation function layer 15 at a temperature of 25°C and a humidity of 40% RH is calculated from the following expression.

$$\text{Content of water contained in separation function layer 15 [wt\%]} = \{W/(A\text{-}B)\} \times 100$$

The thickness of separation function layer 15 is preferably greater than or equal to 0.1 μm, more preferably greater than or equal to 0.5 μm, still more preferably greater than or equal to 1 μm, and preferably less than or equal to 600 μm, more preferably less than or equal to 400 μm, still more preferably less than or equal to 200 μm.

(First porous layer and second porous layer)

It is preferable that first porous layer 11 and a second porous layer 12 have porosity with high gas permeability so as not to be resistant to diffusion of a source gas supplied to separation function layer 15 of gas separation membrane 10 or a specific gas component contained in the source gas. First porous layer 11 and second porous layer 12 can be each in directly contact with separation function layer 15.

Each of first porous layer 11 and second porous layer 12 preferably contains a resin material. Examples of the resin material contained in first porous layer 11 and second porous layer 12 include polyolefin resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; and resin materials such as polystyrene (PS), polyethersulfone (PES), polyphenylene sulfide (PPS), polysulfone (PSF), polyacrylonitrile (PAN), polyphenylene oxide (PPO), polyamide (PA), polyimide (PI), polyetherimide (PEI), polyetheretherketone (PEEK), high-molecular-weight polyesters, heat-resistant polyamides, aramids, and polycarbonates. Among them, polyolefin-based resins or fluorine-containing resins are preferable, and polyethylene, polypropylene or polytetrafluoroethylene is more preferable, from the viewpoint of water repellency. Examples of the materials contained in first porous layer 11 and second porous layer 12 include inorganic materials such as metals, glass, and ceramics in addition to the resin materials, and the inorganic materials and the resin materials may be contained. The resin material forming first porous layer 11 and the resin material forming second porous layer 12 may be the same material or different materials.

The thicknesses of first porous layer 11 and second porous layer 12 are not particularly limited. From the viewpoint of mechanical strength, the thickness of each of first porous layer 11 and second porous layer 12 is independently preferably greater than or equal to 10 μm, more preferably greater than or equal to 15 μm, and preferably less than or equal to 3000 μm, more preferably less than or equal to 500 μm, still more preferably less than or equal to 150 μm.

It is preferable that first porous layer 11 and second porous layer 12 have heat resistance sufficient to withstand a maximum temperature in manufacturing or operations of the gas separation membrane, the separation membrane element or the separation membrane module. The heat resistance sufficient to withstand a maximum temperature means that even after storage of first porous layer 11 or second porous layer 12 at the maximum temperature or a temperature higher than the maximum temperature for 2 hours, the form before the storage is maintained, and curling that is caused by heat shrinkage or heat melting and that can be visually recognized does not occur. The maximum temperature is preferably greater than or equal to 60°C, more preferably greater than or equal to 70°C, still more preferably greater than or equal to 80°C, most preferably greater than or equal to 100°C.

From the viewpoint of mechanical strength and adhesion to the separation function layer, the void ratio of each of first porous layer 11 and second porous layer 12 is preferably greater than or equal to 50 vol%, more preferably greater than or equal to 55 vol%.

The void ratio can be calculated in accordance with the following procedure. First, the area, the thickness and the weight [g] of a sample obtained by cutting first porous layer 11 or second porous layer 12 to a size of 250 mm × 200 mm are measured. The void ratio is calculated from the following expression, where ρ is a true density [g/cm$^3$] of a material for forming first porous layer 11.

$$\text{Void ratio [vol\%]} = [(\text{area of sample} \times \text{thickness of sample} \times \rho) - \text{weight of}$$
$$\text{sample}]/(\text{area of sample} \times \text{thickness of sample} \times \rho)$$

The true density of first porous layer 11 or second porous layer 12 can be determined by measuring the volume and the weight of a melted and solidified sample obtained by heating the cut sample to a temperature greater than or equal to the melting point, melting the sample into a non-porous shape, and then cooling and solidifying the sample.

From the viewpoint of mechanical strength and adhesion to the separation function layer, the pore size of each of first porous layer 11 and second porous layer 12 is preferably greater than or equal to 0.005 μm, and preferably less than or equal to 10 μm, more preferably less than or equal to 1 μm.

The pore size can be measured in accordance with the following measurement method.

(1) The pore size [μm] of each of first porous layer 11 and second porous layer 12 is measured by using Perm Porometer (model: CFP-1500 AXLC (500 PSI type) manufactured by PMI) and a test liquid (trade name "GalWick" (manufactured by PMI)).

(2) First porous layer 11 and second porous layer 12 immersed in the test liquid and sufficiently degassed are used as a measurement sample. For this measurement sample, a change in flow rate (wetting flow rate) with the pressure continuously changed from 100 kPa to 2200 kPa is measured.

(3) When the pressure is increased, the liquid film of the largest hole is broken, so that the flow rate rises (bubble point). When the pressure is further increased after the bubble point is detected, the flow rate increases depending on each pressure. The flow rate at a pressure at which the liquid film of the smallest pore is broken coincides with the flow rate in dry first porous layer 11 or second porous layer 12 (dry flow rate). Where P [Pa] is a pressure at which the liquid film of the measurement sample is broken and r [N/m] is a surface tension of the test liquid, the pore size d [μm] of the liquid film broken by pressure P satisfies the relationship of the following expression (i).

$$d = C \cdot r/P \quad \text{(i)}$$

wherein C is a constant determined by the wetting tension of the test liquid, the contact angle and the like.

(4) A pressure at which the cumulative filter flow [%], which is a value obtained by dividing the wetting tension at a certain pressure measured as described above by the dry flow rate of the pressure, is 50% is calculated, and a pore size of the liquid film broken at the calculated pressure is determined on the basis of the expression (i), and taken as a pore size [μm].

A porous body may be further laminated on surfaces of first porous layer 11 and second porous layer 12 not in contact with separation function layer 15 for the purpose of additionally imparting a strength to first porous layer 11 and second porous layer 12. As the porous body, non-woven fabrics or woven fabrics containing the resin materials, inorganic materials, or the resin and inorganic materials, exemplified in connection with first porous layer 11 and second porous layer 12 can be suitably used.

<Method for manufacturing gas separation membrane>

The method for manufacturing a gas separation membrane according to the present embodiment is a method for manufacturing gas separation membrane 10 which includes first porous layer 11 and separation function layer 15 containing a resin composition, and is selectively permeable to a specific gas component. The method for manufacturing gas separation membrane 10 includes a step of applying an application liquid containing the resin composition onto first porous layer 11 (hereinafter, sometimes referred to as an "application step").

The application step may include a step of preparing an application liquid (hereinafter, sometimes referred to as a "preparation step"). The preparation step may include a step of mixing crosslinked polymer (Xa) having a carboxy group and a crosslinked structure and a medium, or may include a step of mixing crosslinked polymer (Xa), a medium and a basic compound, or may include both of these steps (hereinafter, they are sometimes referred to collectively as a "mixing step").

The method for manufacturing gas separation membrane 10 may further include a step of removing the medium from the applied layer formed on first porous layer 11 in the application step (hereinafter, sometimes referred to as a "drying step"). The method for manufacturing gas separation membrane 10 may further include a step of laminating second porous layer 12 on the applied layer after the application step and before the drying step, or after the drying step.

The application liquid used in the application step contains a resin composition and a medium. When the resin composition contains a medium, the resin composition may be directly used as the application liquid. Examples of the medium include those described above. The content of the medium in the application liquid is preferably greater than or equal to 10 wt%, more preferably greater than or equal to 30 wt%, still more preferably greater than or equal to 50 wt%, and preferably less than or equal to 99 wt%, more preferably less than or equal to 98 wt%, based on the total weight of the application liquid.

The application liquid may be prepared in the preparation step. The preparation step is a mixing step of mixing at least crosslinked polymer (Xa) and a medium, where a basic compound may be further mixed. In the preparation step, the above-described non-crosslinked polymer, amino acid or salt thereof, hydration reaction catalyst, filler, surfactant, and the like may be further mixed.

The basic compound is a compound capable of neutralizing the carboxy group of crosslinked polymer (Xa) and/or the acidic dissociable group of the non-crosslinked polymer to give a salt form. Examples of the basic compound include alkali metal compounds, amines, and quaternary ammonium hydroxide, with alkali metal compounds being more preferable.

Examples of the alkali metal compound include alkali metal carbonates such as lithium carbonate, sodium carbonate, potassium carbonate, rubidium carbonate and cesium carbonate; alkali metal bicarbonates such as lithium bicarbonate, sodium bicarbonate, potassium bicarbonate, rubidium bicarbonate and cesium bicarbonate; and alkali metal hydroxides such as lithium hydroxide, sodium hydroxide, potassium hydroxide, rubidium hydroxide and cesium hydroxide. The alkali metal compound is preferably an alkali metal hydroxide, more preferably potassium hydroxide or cesium hydroxide.

Examples of the amine include alkanolamines such as monoethanolamine; amines having one primary amino group, such as 3-amino-1 propanol; amines having one secondary amino group, such as diethanolamine and 2-methylaminoisopropanol; amines having one tertiary amino group, such as triethanolamine; amines having two primary amino groups, such as ethylenediamine; amines having two secondary amino groups, such as N,N'-bis(2-hydroxyethyl)ethylenediamine; amines having one cyclic amino group, such as pyrrolidine, piperidine, morpholine, N-methylmorpholine, thiomorpholine and hexamethyleneimine; amines having two cyclic amino groups, such as piperazine, 2-methylpiperazine, 1-methylpiperazine and 1,4-dimethylpiperazine; and amines having a plurality of amino groups, such as diethylenetriamine and tetraethylenepentamine.

The quaternary ammonium hydroxide is not particularly limited, and the cation thereof is preferably at least one selected from the group consisting of a 2-hydroxyethyltrimethylammonium ion; a bis(2-hydroxyethyl)dimethylammonium ion; a tris(2-hydroxyethyl)methylammonium ion; a tetraalkylammonium ion such as a tetramethylammonium ion, a tetraethylammonium ion, a tetrapropylammonium ion, a tetrabutylammonium ion, a N,N,N-tetramethyl-1-adamantylammonium ion, a tetradecyltrimethylammonium ion, a hexadecyltrimethylammonium ion, a methyltributylammonium ion or a tri-n-octylmethylammonium ion; a benzyltrialkylammonium ion such as a benzyltrimethylammonium ion, a benzyltributylammonium ion or a benzyldimethyloctadecylammonium ion; a phenyltrimethylammonium ion; a diphenyldimethylammonium ion; and an imidazolium ion.

It is preferable that the basic compound is used in an amount sufficient to ensure that the carboxy group of crosslinked polymer (Xa) contained in the application liquid, the acidic dissociable group of the non-crosslinked polymer, and the acidic dissociable group derivative group can be in a salt form. The amount of the basic compound contained in the application liquid is preferably less than or equal to 5 mol, more preferably less than or equal to 4.5 mol, still more preferably less than or equal to 4 mol, particularly preferably 2 mol, and normally greater than or equal to 1 mol, preferably greater than or equal to 1.1 mol, based on the total of 1 mol of the carboxy group, the acidic dissociable group, and the acidic dissociable group derivative group.

In the preparation step, defoaming treatment may be performed to remove bubbles contained in the mixed liquid after crosslinked polymer (Xa), the medium and other compounds are mixed. Examples of the defoaming treatment include a method in which shear is applied by, for example, stirring or filtering the mixed liquid; a method in which the mixed liquid is degassed in vacuum or degassed under reduced pressure; and a method in which the mixed liquid is degassed by performing heating.

The application step is a step of applying an application liquid to first porous layer 11. The application step can be carried out by a slot die method, a spin coating, a bar coating, a die coating method, a blade coating method, an air-knife coating method, a gravure coating method, a roll coating method, a spray coating method, a dip coating method, a comma roll method, a kiss coating method, screen printing, inkjet printing or the like.

The temperature of the application liquid applied in the application step is preferably greater than or equal to 10°C, and preferably less than or equal to 90°C, more preferably less than or equal to 80°C. The application amount (solid content amount) of the application liquid in the application step is preferably greater than or equal to 1 g/m$^2$, more preferably greater than or equal to 5 g/m$^2$, still more preferably greater than or equal to 10 g/m$^2$, and preferably less than or equal to 1000 g/m$^2$, less than or equal to 750 g/m$^2$, or less than or equal to 500 g/m$^2$.

When the application liquid does not contain a surfactant, prior to the application step, a surface of the first porous layer which is coated with the application liquid may be coated with a surfactant in advance, or may be subjected to surface activation treatment. Examples of the surface activation treatment include corona treatment, plasma treatment, and electron beam treatment, with corona treatment or electron beam treatment being preferable.

The drying step is a step of removing the medium from the application layer formed on first porous layer 11. The drying step may be performed by heating the application layer, performed by ventilating the application layer, or performed by removing the medium from the application layer under reduced pressure. In the drying step, it is preferable that the medium is removed from the application layer at atmospheric pressure. The heating temperature in the drying step is preferably greater than or equal to 50°C, more preferably greater than or equal to 60°C, and preferably less than or equal to 160°C, more preferably less than or equal to 150°C. The heating time in the drying step is preferably greater than or equal to 10 minutes, preferably less than or equal to 4 hours, more preferably less than or equal to 2 hours.

The amount of moisture in the application layer after removal of the medium in the drying step is preferably greater than or equal to 5 wt%, more preferably greater than or equal to 8 wt%, still more preferably greater than or equal to 9%, and normally less than or equal to 50 wt% based on the total weight of the application layer after drying.

The lamination step is a step of laminating second porous layer 12 on the applied layer formed in the application step. In lamination step (1), a step of further removing the medium in the applied layer by heating or the like may be carried out after second porous layer 12 is laminated.

<Separation membrane element>

The separation membrane element is intended for separation of a specific gas component from a source gas containing the specific gas component. The separation membrane element includes gas separation membrane 10, a feed-side space for feeding a source gas to gas separation membrane 10; a permeation-side space for a permeate gas that has permeated gas separation membrane 10; and a sealing portion for preventing mixing of the source gas in the feed-side space and the permeate gas in the permeation-side space.

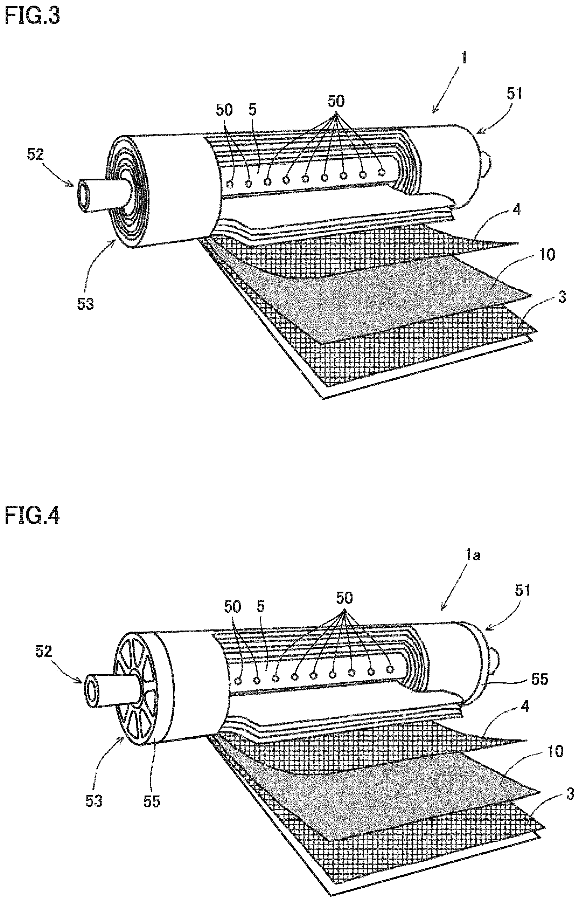

The separation membrane element may be of spiral-wound type, flat membrane type, hollow fiber type, tube type, pleat type, plate-and-frame type, or the like. In the following description, spiral-wound type separation membrane elements 1, 1a shown in Figs. 3 and 4 are given as an example. Figs. 3 and 4 are schematic perspective views showing an example of a separation membrane element according to the present embodiment, in which a partially cutout portion is provided.

As shown in Figs. 3 and 4, separation membrane element 1, 1a may include:

a feed-side flow path member 3 that forms a flow path through which a source gas containing a specific gas component flows;
gas separation membrane 10 in which the specific gas component contained in the source gas flowing in feed-side flow path member 3 is selectively separated to permeate the gas separation membrane;
a permeation-side flow path member 4 that forms a flow path through which a permeate gas containing the specific gas component, which has permeated gas separation membrane 10, flows;

a sealing portion for preventing mixing of the source gas with the permeate gas; and

a central tube 5 for collecting the permeate gas flowing through permeation-side flow path member 4,

the separation membrane element including a wound body in which a multilayer body for an element is wound around central tube 5, the multilayer body being such that at least one feed-side flow path member 3, at least one gas separation membrane 10 and at least one permeation-side flow path member 4 are laminated. The wound body may have any shape such as a cylindrical shape or a rectangular cylindrical shape. Central tube 5 has a plurality of holes 50 in the outer peripheral surface of central tube 5. Holes 50 communicate between the flow path space for the permeate gas formed by permeation-side flow path member 4 and an inner hollow space of central tube 5.

Spiral-wound type separation membrane element 1, 1a may further include a fixing member such as an outer peripheral tape or an anti-telescope device 55 shown in Fig. 4 in order to prevent the wound body from being rewound or collapsed in its winding. In order to secure a strength against a load due to internal pressure and external pressure on the separation membrane element, an outer wrap (reinforcing layer) may be provided on the outermost periphery of the wound body.

The specific gas component contained in the source gas is preferably an acidic gas. Examples of the acidic gas include those described above. Examples of the gas component contained in the source gas, other than the specific gas component include hydrogen, hydrocarbons such as methane and ethylene, nitrogen, and carbon monoxide. It is preferable that the source gas contains carbon dioxide and/or hydrogen sulfide as a specific gas component, and hydrogen, hydrocarbon and/or nitrogen as a gas component other than the specific gas component.

The source gas may contain water (water vapor). The relative humidity of the source gas is preferably greater than or equal to 20% RH, more preferably greater than or equal to 30% RH, still more preferably greater than or equal to 40% RH, and normally less than or equal to 100 RH%, and may be less than or equal to 98% RH at a temperature at which a gas membrane separation process is carried out (e.g. 60 to 120°C or 60 to 100°C).

The content of the acidic gas contained in the source gas is preferably greater than or equal to 1 ppm, and preferably less than or equal to 60%, more preferably less than or equal to 50% on a volume basis.

Feed-side flow path member 3 and permeation-side flow path member 4 preferably have a function of promoting the turbulent flows (surface renewal of the membrane surface) of the source gas and permeate gas that has permeated gas separation membrane 10 to increase the membrane permeation rate of the permeate gas in the source gas, and a function of reducing the pressure losses of the source gas to be fed and permeate gas that has permeated gas separation membrane 10 as much as possible. Since it is preferable that feed-side flow path member 3 and permeation-side flow path member 4 preferably have a function of generating turbulent flow in the source gas and the permeate gas, in addition to a function as a spacer for forming a flow path for the source gas and the permeate gas, those having a network shape (net shape, mesh shape, and the like) are suitably used. Depending on the network shape, the flow path for the gas changes. Therefore, the shape of the unit cell of the network is preferably selected according to the purpose, for example, from shapes such as a square, a rectangle, a rhombus, and a parallelogram. Materials of feed-side flow path member 3 and permeation-side flow path member 4 are not particularly limited. The materials preferably have heat resistance capable of enduring the operating temperature conditions of a separation device in which gas separation membrane element 1, 1a is provided.

A sealing part is provided to prevent the mixing of the source gas with the permeate gas. For example, a sealing material penetrates into permeation-side flow path member 4 and gas separation membrane 10, and is cured, whereby the sealing part can be formed. The sealing part can be generally provided at end parts located at both ends in a direction parallel to the axis of central tube 5 of the wound body, and at the end part in which a distance between central tube 5 and the end part is long among end parts located at both ends in a direction orthogonal to the axis of central tube 5 so as to have a so-called envelope shape. A material generally used as an adhesive agent can be used for the sealing part. For example, an epoxy resin and the like can be used.

Central tube 5 is a conduit for collecting the permeate gas that has permeated gas separation membrane 10 and discharging the same from separation membrane element 1, 1a. Central tube 5 is preferably made of a material that has heat resistance capable of enduring the operating temperature conditions of separation device in which separation membrane element 1, 1a is provided and a mechanical strength capable of enduring the rolling of the multilayer body for an element.

(Separation membrane module)

The separation membrane element can be used for a separation membrane module. The separation membrane module has one or more separation membrane elements. The separation membrane module includes a source gas feeding port (portion communicating with a feed-side end part 51 shown in Figs. 3 and 4) communicating with a flow path formed by feed-side flow path member 3 of the separation membrane element, a retentate gas discharge port (portion communicating with a discharge-side end part 53 shown in Figs. 3 and 4), and a permeate gas discharge port (portion communicating with a discharge port 52 shown in Figs. 3 and 4) communicating with a flow path formed by permeation-side flow path member 4 of the separation membrane element. In the separation membrane module, the source gas is fed to gas separation membrane 10 through the source gas feeding port, the permeate gas that has permeated gas separation membrane 10 is discharged through the permeate gas discharge port, and the source gas that has not permeated gas separation membrane 10 is discharged through the retentate gas discharge port. The source gas feeding port, the retentate gas discharge port, and the permeate gas discharge port may be provided in the main body of the separation membrane element, or provided in a container for storing the separation membrane element (hereinafter, referred to as a "housing").

The housing can form a space for sealing the source gas flowing in the separation membrane module. The housing may include, for example, a cylindrical member made of stainless steel and the like, and a blocking member for blocking both the axial ends of the cylindrical member. The housing may have any shape such as a cylindrical shape or a rectangular cylindrical shape. It is preferable that the housing has a cylindrical shape because separation membrane element usually has a cylindrical shape. A partition can be provided in the housing to prevent the mixing of the source gas fed to feed-side end part 51 with the retentate gas that has not permeated gas separation membrane 10 provided in the separation membrane element.

When two or more separation membrane elements are disposed in the housing, the source gases fed to respective separation membrane elements may be fed in parallel or in series. Here, feeding source gases in parallel means that at least the source gases are distributed and introduced into a plurality of separation membrane elements. Feeding source gases in series means that at least a permeate gas and/or a retentate gas discharged from upstream gas separation membrane element are/is introduced into downstream separation membrane element.

(Gas Separation Device)

The gas separation device may include a feed-side space and a permeation-side space separated from each other by gas separation membrane 10, a feed-side inlet for feeding a source gas containing at least a specific gas component from a feeding part to the feed-side space, a permeation-side outlet for discharging a permeate gas containing a specific gas component, which has permeated gas separation membrane 10, from the permeation-side space, and a non-permeation-side outlet for discharging a source gas that has not permeated gas separation membrane 10 from the feed-side space.

The gas separation device can include at least one separation membrane module including a separation membrane element including gas separation membrane 10 described above. The arrangement and number of gas separation membrane modules in the gas separation device can be selected according to the required throughput, the recovery rate of a specific gas component, the size of the place to install the separation device, and the like.

(Gas separation method)

The gas separation method is a method for separating a specific gas component by bringing a source gas containing at least a specific gas component into contact with gas separation membrane 10. Examples of the method for bringing a source gas into contact with gas separation membrane 10 include a method using a gas separation device including a separation membrane module.

The gas separation method may be carried out by a method in which the pressure of the source gas fed to the feed-side of gas separation membrane 10 is increased by a compressor or the like to make the feed-side gas partial pressure higher than the permeation-side (side of gas separation membrane 10 on which the permeate gas is discharged) gas partial pressure; a method in which the permeation-side of gas separation membrane 10 is brought into a reduced-pressure state to make the feed-side gas partial pressure higher than the permeation-side gas partial pressure ("pressure reduction method"); a method in which a sweep gas to be discharged together with the permeate gas is fed to the permeation side of gas separation membrane 10 to increase the amount of the permeate gas (sweep method); and a combination of two or more of these methods.

It is preferable that gas separation membrane 10 for use in the gas separation method is incorporated in a separation membrane element or a separation membrane module when used.

When the specific gas component is an acidic gas, the acidic gas separated by the gas separation method according to the present embodiment may be further separated and/or removed by an acidic gas separation process such as a known desulfurization process or a chemical absorption method.

The gas separation method according to the present embodiment can be used as, for example, a pretreatment technique or an alternative technique for separation of an acidic gas from a biogas (digestion gas) containing the acidic gas generated by an anaerobic treatment method; separation of an acidic gas using gas separation membrane in gas separating and recovering apparatus as described in Japanese Patent Laying-Open No. 2007-297605; separation of an acidic gas in power generation by gasification of coal or a solid oxide fuel cell (SOFC); separation of an acid gas in hydrodesulfurization and purification of petroleum and gas, manufacturing of natural gas, manufacturing of petroleum-associated gas, manufacturing of synthesis gas, a plant for manufacturing chemical products, reforming, enhanced oil recovery (EOR), a GTL technique, treatment of industrial exhaust gas, and the like; air conditioning; and acidic gas separation techniques such as an adsorption separation method, a chemical absorption method and cryogenic separation, and desulfurization methods such as a dry desulfurization method, a wet desulfurization method and a biological desulfurization method.

EXAMPLES

Hereinafter, the present invention will be more specifically described with reference to Examples and Comparative Examples; however, the present invention is not intended to be limited thereto.

[Measurement of mesh size of crosslinked polymer (X)]

A gas separation membrane obtained in each of examples and comparative examples was cut, a second porous layer was peeled off, and an exposed separation function layer was scraped out. 4.93 g of water was added to 0.67 g of the separation function layer scraped out, and the mixture was stirred to obtain an aqueous dispersion liquid in which the concentration of a resin composition forming the separation function layer is 12 wt%. A glass capillary for X-ray diffraction, which has an inner diameter of 1 mm, was filled with the aqueous dispersion liquid by capillary action, and small-angle X-ray scattering measurement and transmission X-ray intensity measurement were performed by using a small-angle X-ray scattering (SAXS) apparatus (Nano Viewer manufactured by Rigaku Corporation). The measurement range of the magnitude q of the scattering vector was from 0.12 nm$^{-1}$ to 2.3 nm$^{-1}$.

Next, the small-angle X-ray scattering measurement and the transmitted X-ray intensity measurement were performed under the same conditions as described above except that the aqueous dispersion was not contained, and the background was corrected. The sector average profile within $\pm$ 10 ° with respect to a direction along the cylindrical axis of the glass capillary was fitted to the following expression to calculate a mesh size $\xi$.

$$f(q) = C + A/(1 + \xi^2 q^2)$$

[Measurement of correlation function value of crosslinked polymer (X) at relaxation time of $3 \times 10^4$ $\mu$ seconds]

1.32 g of crosslinked polymer (Xa) used in each of examples and comparative examples, 5.49 g of a 50 wt% cesium hydroxide aqueous solution and 50.59 g of water were stirred to obtain a measurement sample having a crosslinked polymer (Xa) concentration of 2.3 wt%. The obtained measurement sample was subjected to measurement at 10 points with a nanoparticle analyzer (nano Partica SZ-100 V2 manufactured by HORIBA, Ltd., using a gel unit) over the range of 0 to 900 $\mu$m by a dynamic light scattering method (photon correlation method), where the measurement range was from 0.3 nm to 10 $\mu$m, and the stage was elevated with a step of 100 $\mu$m. The mesh size was calculated by ensemble mean calculation of the obtained autocorrelation, and the correlation function value at a relaxation time of $3 \times 10^4$ $\mu$ seconds was measured with a scattered light intensity scale used as a particle size scale.

[Viscosity of crosslinked polymer (Xa)]

The viscosity of crosslinked polymer (Xa) was measured in terms of a 0.5 wt% aqueous solution under the conditions of pH 7, a temperature of 25°C and a rotation speed of 20 rpm by using a B-type viscometer.

[Evaluation of separation performance]

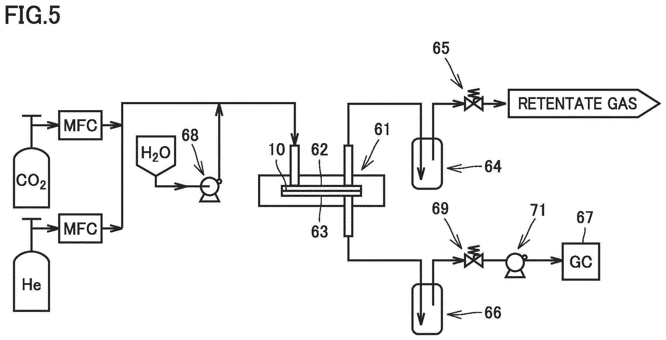

By using a gas separation device including a gas separation membrane cell 61 as shown in Fig. 5, the separation performance of the gas separation membrane obtained in each of examples and comparative examples was evaluated. Specifically, the produced gas separation membrane was cut to an appropriate size to form a flat membrane shape. Gas separation membrane 10 was fixed between a feed-side chamber 62 and a permeation-side chamber 63 of stainless steel gas separation membrane cell 61. The temperature of the gas separation membrane cell was maintained at 90°C. Source gases ($CO_2$: 25.2 vol%, He: 19.1 vol%, $H_2O$: 55.7 vol%) were fed to feed-side chamber 62 of gas separation membrane cell 61 at a flow rate of 619.3 NmL/min. Here, water was sent by a metered liquid feed pump 68, heated and evaporated to adjust $H_2O$ to the above mixing ratio. The pressure of the feed-side chamber 62 was adjusted to 108 kPaA (absolute pressure) by a back pressure regulator 65 provided on the downstream side of a cooling trap 64 in the middle of a retentate gas discharge path. A back pressure regulator 69 and a decompression pump 71 were also provided between a cooling trap 66 and a gas chromatograph 67, thereby adjusting the pressure of permeation-side chamber 63 to 45 kPaA.

When the steady state was reached after the start of operation of the gas separation device, the permeate gas after water vapor contained in the permeate gas discharged from permeation-side chamber 63 was removed by cooling trap 66 was analyzed by gas chromatograph 67 to measure the $CO_2$ permeance [mol/(m2·sec·kPa)] and the He permeance [mol/($m^2$·sec·kPa)], and the permeance ratio ($CO_2$ permeance/He permeance) was calculated.

[Example 1]

1.10 g of crosslinked polyacrylic acid (1) (CARBOPOL 981 manufactured by Lubrizol Corporation) as crosslinked polymer (Xa), 0.22 g of non-crosslinked polyacrylic acid (AQUPAANA manufactured by Sumitomo Seika Chemicals Company, Limited) as a non-crosslinked polymer, 45.5 g of water, 10.45 g of a 50 wt% cesium hydroxide aqueous solution, 2.4 g of sarcosine, and 0.33 g of a 10 wt% aqueous solution of surfactant (SURFLON S-242 manufactured by AGC Seimi Chemical Co., Ltd.) were mixed and stirred to obtain an application liquid.

The application liquid was applied onto a hydrophobic PTFE porous membrane ("POREFLON HP-010-50" manufactured by Sumitomo Electric Fine Polymer, Inc., film thickness: 50 $\mu$m, pore size: 0.1 $\mu$m, 40 g/$m^2$) as a first porous layer, and a hydrophobic PTFE porous membrane (identical to the first porous layer) as a second porous layer was then laminated on the applied layer. The applied layer was dried with a dryer for about 30 minutes under the condition of a temperature of about 100°C in the air atmosphere to form a gel-like separation function layer having a thickness of 50 $\mu$m. In this way, a gas separation membrane (1) including a first porous layer, a separation function layer and a second porous layer in this order was obtained. The viscosity, the mesh size and the correlation function value of crosslinked polyacrylic acid (1) were measured. The separation performance of gas separation membrane (1) was evaluated. The results are shown in Table 1.

[Example 2]

Except that crosslinked polyacrylic acid (2) (AQUPEC HV-801EG manufactured by Sumitomo Seika Chemicals Company, Limited) was used instead of crosslinked polyacrylic acid (1), the same procedure as in Example 1 was carried out to obtain a gas separation membrane (2). The viscosity, the mesh size and the correlation function value of crosslinked polyacrylic acid (2) were measured. The separation performance of gas separation membrane (2) was evaluated. The results are shown in Table 1.

[Example 3]

Except that crosslinked polyacrylic acid (3) (CARBOPOL 941 manufactured by Lubrizol Corporation) was used instead of crosslinked polyacrylic acid (1), the same procedure as in Example 1 was carried out to obtain a gas separation membrane (3). The viscosity, the mesh size and the correlation function value of crosslinked polyacrylic acid (3) were measured. The separation performance of gas separation membrane (3) was evaluated. The results are shown in Table 1.

[Example 4]

Except that crosslinked polyacrylic acid (4) (CARBOPOL 971P manufactured by Lubrizol Corporation) was used instead of crosslinked polyacrylic acid (1), the same procedure as in Example 1 was carried out to obtain a gas separation membrane (4). The viscosity, the mesh size and the correlation function value of crosslinked polyacrylic acid (4) were measured. The separation performance of gas separation membrane (4) was evaluated. The results are shown in Table 1.

[Example 5]

Except that crosslinked polyacrylic acid (5) (CARBOPOL 71G manufactured by Lubrizol Corporation) was used instead of crosslinked polyacrylic acid (1), the same procedure as in Example 1 was carried out to obtain a gas separation membrane (5). The viscosity, the mesh size and the correlation function value of crosslinked polyacrylic acid (5) were measured. The separation performance of gas separation membrane (5) was evaluated. The results are shown in Table 1.

[Comparative Example 1]

Except that crosslinked polyacrylic acid (6) (AQUPEC HV-505E manufactured by Sumitomo Seika Chemicals Company, Limited) was used instead of crosslinked polyacrylic acid (1), the same procedure as in Example 1 was carried out to obtain a gas separation membrane (6). The viscosity, the mesh size and the correlation function value of crosslinked polyacrylic acid (6) were measured. When the separation performance of gas separation membrane (6) was evaluated, leakage occurred, so that it was not possible to measure the $CO_2$ permeance and the He permeance. The results are shown in Table 1.

[Comparative Example 2]

Except that crosslinked polyacrylic acid (7) (AQUPEC HV-501E manufactured by Sumitomo Seika Chemicals Company, Limited) was used instead of crosslinked polyacrylic acid (1), the same procedure as in Example 1 was carried out to obtain a gas separation membrane (7). The viscosity, the mesh size and the correlation function value of crosslinked polyacrylic acid (7) were measured. The separation performance of gas separation membrane (7) was evaluated. The results are shown in Table 1.

[Table 1]

| | Crosslinked polyacrylic acid | Viscosity [mPa·s] | Mesh size [nm] | Correlation function value | Permeance [mol/ (m²·sec·kPa)] | | Permeance ratio (CO₂/He) |
|---|---|---|---|---|---|---|---|
| | | | | | $CO_2$ | He | |
| Example 1 | (1) | 7,020 | 1.92 | 0.47 | $5.02\times10^{-5}$ | $8.40\times10^{-8}$ | 597 |
| Example 2 | (2) | 8,000 | 1.84 | 0.38 | $4.34\times10^{-5}$ | $7.10\times10^{-8}$ | 612 |
| Example 3 | (3) | 8,600 | 1.86 | 0.38 | $4.98\times10^{-5}$ | $1.00\times10^{-7}$ | 498 |
| Example 4 | (4) | 10,660 | 2.13 | 0.31 | $4.70\times10^{-5}$ | $8.30\times10^{-8}$ | 566 |
| Example 5 | (5) | 5,720 | 2.05 | 0.62 | $5.20\times10^{-5}$ | $1.10\times10^{-7}$ | 473 |
| Comparative Example 1 | (6) | 48,000 | 2.37 | 0.65 | - | - | - |
| Comparative Example 2 | (7) | 8,500 | 1.7 | 0.27 | $4.26\times10^{-5}$ | $1.40\times10^{-7}$ | 304 |

REFERENCE SIGNS LIST

1, 1a: gas separation membrane element, 3: feed-side flow path member, 4: permeate-side flow path member, 5: central tube, 10: gas separation membrane, 11: first porous layer, 12: second porous layer, 15: separation function layer, 50: hole, 51: feed-side end part, 52: discharge port, 53: discharge-side end part, 55: anti-telescope device, 61: gas separation membrane cell, 62: feed-side chamber, 63: permeate-side chamber, 64: cooling trap, 65: back pressure regulator, 66: cooling trap, 67: gas chromatograph, 68: metered liquid feed pump, 69: back pressure regulator, 71: decompression pump

**Claims**

1.    A resin composition for a gas separation membrane, comprising a crosslinked polymer (X) having a carboxy group or a salt thereof and a crosslinked structure, wherein a mesh size of the crosslinked polymer (X) in the resin composition is greater than or equal to 1.75 nm and less than or equal to 2.35 nm.

2.    The resin composition for a gas separation membrane according to claim 1, wherein a correlation function value of the crosslinked polymer (X) at a relaxation time of $3 \times 10^4$ μ seconds is greater than or equal to 0.28 and less than or equal to 0.64 as measured by scanning microscopic light scattering.

3.    The resin composition for a gas separation membrane according to claim 1 or 2, wherein the crosslinked polymer (X) is polyacrylic acid having a crosslinked structure.

4.    The resin composition for a gas separation membrane according to any one of claims 1 to 3, wherein a cation forming the salt of the carboxy group is one or more selected from the group consisting of an alkali metal ion, an ammonium ion, a quaternary ammonium ion, and a protonated amine.

5.  The resin composition for a gas separation membrane according to any one of claims 1 to 4, further comprising an amino acid or a salt thereof.

6.  A gas separation membrane which is selectively permeable to a specific gas component, the gas separation membrane comprising the resin composition for a gas separation membrane according to any one of claims 1 to 5.

7.  The gas separation membrane according to claim 6, further comprising a first porous layer and a separation function layer laminated on the first porous layer,
    the separation function layer containing the resin composition for a gas separation membrane.

8.  The gas separation membrane according claim 6 or 7, wherein the specific gas component is an acidic gas.

9.  The gas separation membrane according to claim 8, wherein the acidic gas is carbon dioxide.

10. A method for manufacturing a gas separation membrane which is selectively permeable to a specific gas component,

    the gas separation membrane comprising a first porous layer, and a separation function layer containing the resin composition for a gas separation membrane according to any one of claims 1 to 5,
    the method comprising applying an application liquid containing the resin composition onto the first porous layer.

11. The method for manufacturing a gas separation membrane according to claim 10, wherein the applying comprises preparing the application liquid, and the preparing includes mixing a crosslinked polymer (Xa) having the carboxy group and the crosslinked structure, and a medium.

12. The method for manufacturing a gas separation membrane according to claim 10 or 11, wherein the applying comprises preparing the application liquid, and the preparing comprises mixing a crosslinked polymer (Xa) having the carboxy group and the crosslinked structure, a medium, and a basic compound.

13. The method for manufacturing a gas separation membrane according to claim 12, wherein the basic compound comprises an alkali metal compound.

14. The method for manufacturing a gas separation membrane according to any one of claims 10 to 13, further comprising removing the medium from an applied layer formed on the first porous layer in the applying.

15. A separation membrane element for separating a specific gas component from a source gas containing the specific gas component, the separation membrane element comprising: the gas separation membrane according to any one of claims 6 to 9;

    a feed-side space for feeding the source gas to the gas separation membrane;
    a permeation-side space for a permeate gas that has permeated the gas separation membrane; and
    a sealing portion for preventing mixing of the source gas in the feed-side space and the permeate gas in the permeation-side space.

16. A separation membrane module comprising:

    the separation membrane element according to claim 15;
    a source gas feeding port for feeding the source gas to the gas separation membrane;
    a retentate gas discharge port for discharging the source gas that does not permeate the gas separation membrane; and
    a permeate gas discharge port for discharging the permeate gas.

17. A gas separation device comprising the separation membrane module according to claim 16.

18. A gas separation method for separating a specific gas component by bringing a source gas containing at least the specific gas component into contact with the gas separation membrane according to any one of claims 6 to 9.

FIG.1

10

15
11

FIG.2

10

12
15
11

FIG.3

FIG.4

## FIG.5

| | INTERNATIONAL SEARCH REPORT | International application No. |
|---|---|---|
| | | PCT/JP2021/024171 |

**A. CLASSIFICATION OF SUBJECT MATTER**
Int.Cl. B01D69/00(2006.01)i, B01D69/02(2006.01)i, B01D71/40(2006.01)i,
C08K5/17(2006.01)i, C08L33/02(2006.01)i, B01D53/22(2006.01)i
FI: B01D69/00, B01D53/22, B01D69/02, B01D71/40, C08K5/17, C08L33/02
According to International Patent Classification (IPC) or to both national classification and IPC

**B. FIELDS SEARCHED**

Minimum documentation searched (classification system followed by classification symbols)
Int.Cl. B01D53/22, B01D61/00-69/14, B01D71/40-71/42, B01D71/82,
C08L33/02, C08K5/17

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-172563 A (SUMITOMO CHEMICAL CO., LTD.) 08 November 2018 (2018-11-08), paragraphs [0182]-[0195], [0207]-[0211] | 1-18 |
| A | WO 2016/024523 A1 (SUMITOMO CHEMICAL CO., LTD.) 18 February 2016 (2016-02-18), paragraphs [0065], [0066], [0068]-[0081] | 1-18 |
| A | JP 2009-011927 A (TOKYO INSTITUTE OF TECHNOLOGY) 22 January 2009 (2009-01-22), paragraphs [0052], [0053], [0057]-[0074] | 1-18 |
| A | JP 2013-034973 A (NATIONAL INSTITUTE FOR MATERIALS SCIENCE) 21 February 2013 (2013-02-21), paragraphs [0033]-[0035], [0066]-[0094] | 1-18 |
| A | JP 2017-020806 A (MITSUI CHEMICALS, INC.) 26 January 2017 (2017-01-26), paragraphs [0023]-[0030] | 1-18 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 August 2021 | 31 August 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/024171

| | | |
|---|---|---|
| JP 2018-172563 A | 08 November 2018 | EP 3604452 A1<br>paragraphs [0170]-[0182], [0197]-[0200]<br>WO 2018/181682 A1<br>TW 201842962 A<br>CN 110494499 A<br>KR 10-2019-0132418 A |
| WO 2016/024523 A1 | 18 February 2016 | US 2017/0232398 A1<br>paragraphs [0074]-[0078], [0083]-[0099]<br>EP 3181214 A1<br>TW 201609239 A<br>CN 106573207 A<br>KR 10-2017-0040333 A |
| JP 2009-011927 A | 22 January 2009 | (Family: none) |
| JP 2013-034973 A | 21 February 2013 | (Family: none) |
| JP 2017-020806 A | 26 January 2017 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016024523 A
- JP 2003268009 A
- JP 7088171 A
- JP 2007297605 A